# EUROPEAN PATENT SPECIFICATION

(11) **EP 4 652 849 B1**
(45) Date of publication and mention of the grant of the patent: **04.11.2026**
(21) Application number: 24460041.7
(22) Date of filing: 10.12.2024
(51) Int. Cl.: A23B 11/10, A23L 33/00, A61L 9/16

(54) **METHOD OF HUMAN MILK PRESERVATION**
METHODE ZUR KONSERVIERUNG VON MUTTERMILCH
METHODE DE PRESERVATION DU LAIT HUMAIN

(30) Priority: 29.01.2024 PL 44762924
(43) Date of publication of application: 26.11.2025
(73) Proprietor: Politechnika Gdanska, 80-233 Gdansk (PL)
(72) Inventor: Malinowska, Edyta, 81-109 Gdynia (PL); Mazur, Katarzyna, 80-180 Gdansk (PL); Martysiak-Zurowska, Dorota, 80-021 Bystra (PL); Kusznierewicz, Barbara, 80-254 Gdansk (PL)
(74) Representative: Pawlowska-Bajerska, Justyna

(56) References cited:
- MALINOWSKA-PANCZYK EDYTA ED - ANESE MONICA ET AL: "Can high hydrostatic pressure processing be the best way to preserve human milk?", TRENDS IN FOOD SCIENCE & TECHNOLOGY, ELSEVIER SCIENCE PUBLISHERS, GB, vol. 101, 24 May 2020 (2020-05-24), pages 133 - 138, XP086189197, ISSN: 0924-2244, [retrieved on 20200524], DOI: 10.1016/J.TIFS.2020.05.009
- MAIDA ALAN L. ET AL: "Effects of Isochoric Freezing on the Quality Characteristics of Raw Bovine Milk", FOODS, vol. 12, no. 22, 16 November 2023 (2023-11-16), CH, pages 4150 - 1, XP093284068, ISSN: 2304-8158, DOI: 10.3390/foods12224150
- BOZENA WINDYGA ET AL: "Inactivation of Staphylococcus aureus and native microflora in human milk by high pressure processing", HIGH PRESSURE RESEARCH, vol. 35, no. 2, 9 February 2015 (2015-02-09), US, pages 181 - 188, XP055696595, ISSN: 0895-7959, DOI: 10.1080/08957959.2015.1007972
- DUARTE RICARDO V ET AL: "A microbiological perspective of raw milk preserved at room temperature using hyperbaric storage compared to refrigerated storage", INNOVATIVE FOOD SCIENCE AND EMERGING TECHNOLOGIES, ELSEVIER, AMSTERDAM, NL, vol. 78, 27 April 2022 (2022-04-27), XP087074595, ISSN: 1466-8564, [retrieved on 20220427], DOI: 10.1016/J.IFSET.2022.103019

## Description

The invention relates to method for preservation of human - female milk, enabling microbiological safety to be achieved and simultaneously its biological and nutritional properties. This is achieved through storage under selected moderate-pressure and lowered - subzero-temperature conditions that prevent water crystallization. The invention is has practical use in Human Milk Banks.
Human milk is collected by Human Milk Banks (HMBs), which primarily store this essential food for patients in neonatal intensive care units. These patients are typically preterm infants, newborns with low or very low birth weight, or those with various health problems. Due to the heightened sensitivity of patients at neonatology intensive care units, milk donated to HMBs undergoes specific procedures to protect it from microbial contamination. The handling of milk in HMBs after collection from donors involves the following steps: (1) storage at a temperature of -20°C (for up to 3 months from the date of collection); (2) thawing individual milk portions from a single donor at a temperature below 8°C; (3) combining milk from a single donor and repackaging it into smaller portions (typically 80-100 mL); (4) pasteurization at 62.5°C for 30 minutes (LTLT pasteurization-long time low temperature-or holder pasteurization, HoP), followed by rapid cooling to 4°C; (5) freezing and storage at -20°C (for a maximum of 6 months from the date of expression); (6) thawing at a temperature below 8°C and subsequent delivery to the neonatal unit [Haiden and Ziegler, 2016, DOI: 10.1159/000452821]. These procedures, routinely implemented in practice, ensure the microbiological safety of human milk. However, they may also lead to a reduction in valuable nutrients and biologically active components.

It is considered that the pasteurization process plays a crucial role in the quality of human milk throughout its handling cycle. Numerous studies have shown that even storing raw milk at -20°C causes the first changes to its temperature-sensitive components. A decrease in antioxidant activity [Marinković et al., 2016, DOI: 10.1097/MPG.0000000000001090] and the activity of antioxidant enzymes such as lysozyme and proteases [Hanna et al., 2004, DOI: 10.1136/ADC.2004.049247] has been observed. Additionally, immune cells are significantly inactivated during freezing [Ogundele, 2000, DOI: 10.1007/S004310000577/METRICS]. In most HMBs, milk undergoes HoP pasteurization. This process leads to a significant reduction in the nutritional and biological value of human milk [Picaud, Buffin, 2017, DOI: 10.1016/J.CLP.2016.11.003]. Literature reports suggest the possibility of pasteurizing human milk using alternative techniques, including HTST (high temperature short time), which allows for better retention of valuable milk components [Giribaldi et al., 2016, DOI: 10.1016/J.IFSET.2016.07.004, Patent application no. EP 15176792.8-1358/2014] compared to HoP. A promising method for milk preservation is high pressure processing (HPP). This method is successfully used in the food industry as a non-thermal preservation technique, creating products with new functional and sensory properties. However, the application of HPP in HMBs is constrained by significant costs, as well as the persistent lack of equipment with suitable dimensions and weight that can operate efficiently and safely within the specific conditions of the HMB environment. [Moro et al., 2019, DOI: 10.3389/FPED.2019.00049/BIBTEX]. Existing technologies include methods for preserving human milk through the application of high pressures. These processes involve applying pressures in the range of 200-600 MPa for a short period (up to 1 hour). For example, in the description of WO 14064385, human milk is subjected to at least two pressure cycles from 200 to 400 MPa, with a compression rate of 0.5 to 8 MPa·s⁻¹ and a decompression rate of 0.5 to 100 MPa·s⁻¹, at an initial temperature of 25 to 50°C. According to WO 17004668, human milk is homogenized in the first step at a temperature below approximately 60°C, and then subjected to high pressure above 350 MPa at a temperature not exceeding approximately 60°C. In the description of P.429126, the method for preserving human milk involves treating it with pressure in the range of 400 to 550 MPa, at temperatures from 15 to 35°C in a single pulse, with a decompression time ranging from 80 ms to 1 s. A disadvantage of the methods described in these patents is that after the preservation process, the human milk must be frozen and stored at -20°C.

The extent of changes in the composition of human milk is determined by the level of pressure applied. At pressures up to 400 MPa, the changes are minimal, but such pressures do not provide adequate microbiological safety [Sousa et al., 2016, DOI; 10.1080/10408398.2012.753402]. Higher pressures lead to complete inactivation of microorganisms present in human milk, but simultaneously cause degradation of important biologically active components. Pressures above 400 MPa, similar to HoP, affect the composition of milk, especially its immunological components. Under these conditions, the content of leukocytes, lymphocytes, secretory immunoglobulin A (sIgA), IgA, immunoglobulin M and G, as well as cytokines, drastically decreases in human milk [Contador et al., 2013, DOI: 10.1016/J.IDAIRYJ.2013.03.006; Sousa et al., 2014, DOI: 10.1016/J.FOODCHEM.2013.11.024]. The changes reported by various research groups regarding the levels of sIgA and IgA in human milk after HoP are variable, with losses ranging from 26-64% [Lima et al., 2017, DOI: 10.10961FASEJB.31.1 SUPPLEMENT.958.19; Czank et al., 2009, DOI: 10.1203/pdr.0b013e3181b4554a; Chang et al., 2013, DOI: 10.1016/J.PEDNEO.2013.03.018]. When subjected to 400 MPa at ambient temperature, the IgA content in human milk decreases by 10%, while at 600 MPa it decreases by 50%. The use of high temperatures during pressurization causes a drastic reduction in the content of this immunoglobulin. After applying 300 MPa at 50°C, the IgA level decreases to 48% of its initial concentration. Increasing pressure and temperature leads to even greater losses, and after 600 MPa at 80°C, the IgA concentration in human milk is less than 1 µg/mL (from an initial amount of 1 to 1.6 g/L in raw milk) [Contador et al., 2013, DOI: 10.1016/J.IDAIRYJ.2013.03.006].

The content of lactoferrin (LF) decreases drastically by 50-60% after HoP [Chang et al., 2013, DOI: 10.1016/J.PEDNEO.2013.03.018]. Minor losses of this protein occur after treating the milk with 350 MPa at 20°C. However, at higher pressures, the degree of denaturation of this protein increases. Maintaining pressures of 500 and 600 MPa for 10 minutes results in a decrease of LF by 30% and 45%, respectively [Mayayo et al., 2014, DOI: 10.1016/J.IDAIRYJ.2014.07.001]. In the case of lysozyme, several authors have shown that heating at 62.5°C for 30 minutes reduces the concentration of this enzyme by 50-75% [Koenig et al., 2005, DOI: 10.1177/0890334405280652; Czank et al., 2009, DOI: 10.1203/pdr.0b013e3181b4554a]. A significant loss of lysozyme activity after HoP, by 50% and 44%, has been reported by Sousa et al., [2014] [DOI: 10.1016/J.FOODCHEM.2013.11.024; Lima et al., 2017, DOI: 10.1096/FASEJB.31.1_SUPPLEMENT.958.19]. Treating human milk to 200-600 MPa for 2.5 to 30 minutes does not reduce the activity of this enzyme [Sousa et al., 2014, DOI: 10.1016/J.FOODCHEM.2013.11.024; Mayayo et al., 2016, DOI: 10.1007/S00217-015-2595-7/FIGURES/6].

HoP is an effective method for inactivating milk microbiota; however, its efficacy depends on the initial level of microbiological contamination. To achieve complete pasteurization, the total bacterial count in milk should not exceed 10 colony-forming units (CFU)/mL [Malinowska-Pańczyk et al., 2019, DOI: 10.1016/J.IFSET.2018.11.005]. Windyga et al [2015] found that the number of microorganisms in human milk was reduced by approximately 2.0, 0.5 and 2.5 log cycles after pressurization at 300 MPa at temperatures of 4°C, 20°C and 50°C, respectively. Microorganisms were undetectable in milk samples treated at 500 MPa, regardless of the processing temperature. The preservation of human breast milk in terms of microbial stability and preservation of the nutrient and bioactive compounds present in human breast milk, by a combination of high hydrostatic pressure and low temperature, is disclosed in Malinowska-Panczyk E, Trends in Food Science and Technology 101 (2020): 133-138.

However, better methods of preserving human - female breast milk are still being required that will simultaneously effectively inactivate the milk microbiota and preserve as much as possible the nutritional and health-promoting value of the milk. These enable to optimize both the safety and the biological value of human milk.

The inventors of the invention have successfully provided method for preserving human milk that overcomes the previously mentioned limitations within the state of the art and enable to achieve aforementioned effects.

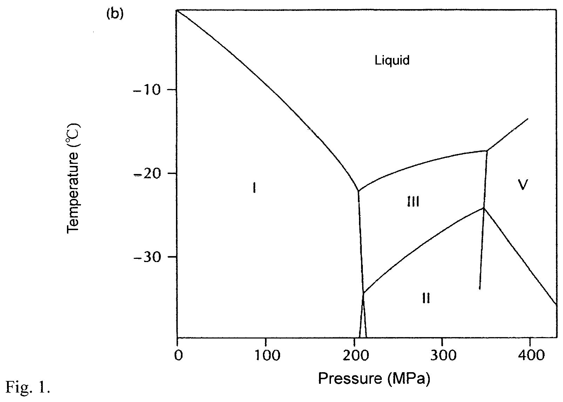

A single-step - one-step preservation method has been provided that comprises the step of storing human milk under moderate pressures ranging from 60 to 130 MPa at temperatures between -5°C and -12°C, in a unfrozen state. The pressure is generated directly within the pressure chamber - vessel that is known in the state of the art by lowering the temperature of the closed system below 0°C. The pressure magnitude - amount depends on the temperature and is selected - fit - determined by the phase diagram of water in the liquid-solid state [Bridgman, 1912, https://doi.org/10.2307/20022754; Rubinsky et al., 2005, doi:10.1016/j.cryobiol.2004.12.002]. For instance, at a pressure of 60 MPa, the processing temperature is -5°C, whereas at 130 MPa, it decreases to -12°C - Fig. 1. The person skilled in the art based on the phase diagram is able to select the amount.

This invention refers to method for preserving human milk by storing it in a unfrozen state under elevated, moderate pressure at lowered - subzero temperatures, below 0°C. The pasteurization effect - the preserving effect is achieved - obtained over a defined period ranging from 2 to 63 days, depending on the used - applied conditions of pressure - but between 78 to 111 MPa and temperature between -7°C to -10°C. The condition and time required to achieve the pasteurization effect was determined by experimental research study. For example, at 60 MPa and -5°C, the pasteurization effect is achieved in 63 days, whereas at 130 MPa and -12°C, it is achieved in just 2 days. The pasteurization effect is achieved in a period of between 2 and 63 days. Furthermore, the milk can be stored under these conditions for up to 90 days and this enable to keep the milk value so the storing up to 90 days is without nutritional loss or biological value. For example, at 111 MPa, the pasteurization effect can be achieved in 2 days - 48 hours. According to the invention, the length - period of preservation - keeping of nutrients and biological active components of the milk portion was examined during conducted research and a range of up to 90 days was selected. According to the invention there will be still no microorganisms in the preserved milk sample, and it can be stored under these selected conditions for up to 90 days to maintain both its nutritional value and preservation effect. In this description, the preservation effect is understood as that the milk sample that is treated under the selected condition achieves the desired microbiological, nutritional, and biological quality.
The invention ensures to obtain the human female breast milk that has the required microbiological safe - cleanliness. Once the preservation process is complete - after the selected range of time, it can be kept and halted when the milk is needed for use. Specifically, the milk samples are stored under elevated pressure in the range of 60-130 MPa at temperatures between -5°C and -12°C, however under conditions of 78 MPa to 111 MPa and -7°C to -10°C according to the present invention, for a period of at least 2 to 90 days, in a known device capable of maintaining these parameters. This method ensures that the milk remains microbiologically safe and can be preserved for the specified duration before being used.

Therefore, storage under these conditions for a minimum of three months does not impact the nutritional composition of human milk and only results in minimal alterations to the levels of selected bioactive proteins.
Human milk is always stored in portions - aliquots to minimize waste. This is also due to the fact that infants using milk from milk banks need small quantities of it. Therefore, portions of human milk, placed in flexible, airtight packaging, are stored in specialized high-pressure vessels and secured, for example, with a spring that keeps the milk portions in a unfrozen zone. To achieve the required pressure and temperature, the following procedures are carried out. The vessel is filled with distilled water and tightly sealed. Then, the high-pressure vessel is gradually introduced into a cryogenic bath with a defined temperature. In this method pressure is generated, and its magnitude depends on the temperature (Bridgman, 1912, https://doi.org/10.2307/20022754). For example, at temperatures of -5°C, -7°C, -10°C, and -12°C, pressures of 60 MPa, 78 MPa, 111 MPa, and 130 MPa are generated, respectively (Fig. 1). Note that conditions of 78 MPa to 111 MPa and -7°C to -10°C are those according to the present invention. The pressure/temperature values were selected experimentally (see Fig. 1). The time required to reach the desired temperature and pressure depends on the size of the pressure vessel - chamber. Afterward, the pressure vessel is moved from the cryogenic bath to a storage chamber at the same temperature, where the milk can be stored for at least 90 days without any loss of nutritional value in the milk portions. The milk achieves the required microbiological safety after a specific period, depending on the pressure and temperature conditions, as outlined in Table 1, described in the example. Throughout the three-month storage period, essential components that support the infant's immune system, such as lysozyme, lactoferrin, sIgA, and α-lactalbumin, are preserved at very high levels, and its nutritional value remains unaffected.

According to the present invention, the pressure is maintained within the range of 78 to 111 MPa, and the temperature is between -7°C and -10°C. This ensures to achieve the milk that can be stored for a minimum of 3 months.

In the prefer embodiment, aliquots - portions of human milk, for instance, two 80 mL portions, are placed within a high-pressure vessel e.g. with the amount of 620 mL. The pressure/temperature values were selected experimentally, typically with a volume of approximately 620 mL. A spring is placed into the vessel to maintain the milk portions in the unfrozen zone, ensuring they remain in a state that prevents ice formation during the process. The vessel is subsequently filled with distilled water and sealed hermetically to ensure no leakage or contamination. The high-pressure chamber is then gradually immersed into a cryogenic bath, where the temperature is progressively reduced in a controlled way. Once the vessel - chamber has reached the target cooling temperature, it is transferred to a storage chamber, maintaining the same temperature at which the pressure was generated, ensuring consistent preservation conditions. The minimum storage duration required to achieve microbial safety and preservation of bioactive components is dependent on the applied pressure. For example, at 111 MPa and -10°C, the preservation time is established to be at least 2 days. Under these conditions, human milk retains its nutritional and immunological value, including essential bioactive proteins such as lactoferrin, lysozyme, and sIgA, for a period of at least 90 days, ensuring both microbiological purity and the maintenance of the milk's bioactive properties.

The inventors have confirmed that during the preservation of human milk under conditions of pressure ranging from 60 to 130 MPa and temperatures between -5°C and - 12°C, however under conditions of 78 MPa to 111 MPa and -7°C to -10°C according to the present invention, within the specified time frame, there is a complete elimination of its microbiota. making the milk microbiologically safe. Once the required microbiological safety is achieved, the milk can be further stored for at least 3 months under moderate-pressure, subzero-temperature conditions without affecting its nutritional value and biologically active components. The method of handling the milk according to the invention ensures that the milk retains highly beneficial biological properties, as the biologically active forms of immune proteins such as lysozyme, lactoferrin, sIgA, and α-lactalbumin are preserved. The inventors have developed a novel method for preserving human milk that eliminates at least three stages in the typical milk handling procedure in milk banks (freezing of raw milk, thermal pasteurization, and re-freezing of pasteurized milk). At the same time, this method produces milk that meets the microbiological standards required after HoP, including the absence of *Enterobacteriaceae* family bacteria, *Staphylococcus aureus,* and no microbial growth in 1 mL of milk. This new approach reduces energy consumption and simultaneously enables the production of microbiologically safe milk with almost unchanged nutritional value and excellent biological properties.

The invention is more described in the examples and following drawing:
Fig. 1. Phase diagram for water in the ice I region (Rubinsky et al., 2005, doi:10.1016/j.cryobiol.2004.12.002)
Fig. 2. Figures showing changes in the content of selected antimicrobial-active proteins after 90 days of storage at 111 MPa/-10°C and after HoP pasteurization.
Fig. 3. Figure showing changes in the content of nutrients and energy value after 90 days of storage at 111 MPa/-10°C and after HoP pasteurization.

Tab. 1. Shows the minimum storage time under the appropriate moderate-pressure, subzero-temperature (lowered temperature) conditions required to achieve the proper level of inactivation of selected groups of microorganisms.

### Example 1.

### Determination of the effectiveness of milk microbiota inactivation during storage under moderate pressure at sub-zero temperatures.

Milk samples were collected from 20 female donors. Raw milk that had been stored at -20°C for no longer than 1 month was used for the study. The milk was thawed at a temperature below 8°C. From the thawed milk, four large batches were prepared, which were then poured into flexible milk storage bottles with a volume of 80 mL. Milk from each batch was stored for 3 months under the following conditions: 60 MPa/-5°C, 78 MPa/-7°C, 111 MPa/-10°C, and 130 MPa/-12°C. Note that the conditions of 78 MPa to 111 MPa and -7°C to -10°C are according to the present invention. The equipment used to generate pressure and maintain the required conditions (pressure and temperature) during the study consists of two parts: a cryogenic bath, where the cooling medium is a non-freezing mixture of water and propylene glycol in a 1:1 ratio, and a storage zone to maintain the set temperature. The pressure vessel was specially designed to store two portions of milk with a volume of 80-100 mL. The material used for the pressure vessel can withstand 5000 operational cycles under elevated pressure at temperatures up to -20°C and internal pressure of 200 MPa.

Two portions of milk were placed in a 620 mL pressure vessel, filled with distilled water, secured with a spring that keeps the samples in the unfrozen zone, and closed. The pressure vessel was immersed into the cryogenic bath from the closing side and gradually submerged to cool the system and generate pressure. The total time for this stage was 90 minutes. After this time, the pressure chamber was transferred to the storage zone and stored for up to 90 days. Various pressure/temperature combinations were used for the study. Raw milk, as well as milk after different storage times, was subjected to microbiological and nutritional analysis, and the determination of antimicrobial-active protein content.

### Microbiological Analysis.

Microbiological analysis was conducted on raw milk as well as milk stored for 24 and 48 hours, 7, 14, 21, and 28 days, and after 2 and 3 months, under different pressure-temperature conditions. The microbiological tests were carried out in accordance with European standards applicable in the food industry. Total microbial count - EN ISO 4833-1:2013-12 - Microbiology of the food chain Microbiology of the food chain - Horizontal method for the enumeration of microorganisms Part 1: Colony count at 30 °C by the pour plate technique;
Coagulase-positive staphylococci - EN ISO 6888-1:2022-03 - Microbiology of the food chain - Horizontal method for the enumeration of coagulase-positive staphylococci *(Staphylococcus aureus* and other species) Part 1: Method using Baird-Parker agar medium; *Enterobacteriaceae* family bacteria - ISO 21528-2:2017-08 - Microbiology of the food chain - Horizontal method for the detection and enumeration of *Enterobacteriaceae* - Part 2: Colony-count technique.

### Results

It was observed that depending on the pressure and temperature, specific groups of microorganisms were not detected in the milk after the specified storage period (Table 1). Therefore, microbiological safety of the milk is achieved after storage for at least 63 days at 60 MPa/-5°C, 7 days at 78 MPa/-7°C, and after 2 days at 111 MPa/-10°C and 130 MPa/-12°C.

**Table 1: Storage time under moderate-pressure subzero-temperature conditions required to achieve complete inactivation of milk microbiota.**

| Storage conditions | Time required to achieve desired level of inactivation [days] | | |
|---|---|---|---|
| | Total microbial count | Coagulase-positive staphylococci | *Enterobacteriaceae* family bacteria |
| 60 MPa/-5°C | 63 | 7 | 1 |
| 78 MPa/-7°C | 7 | 2 | 1 |
| 111 MPa/-10°C | 2 | 1 | 1 |
| 130 MPa/-12°C | 2 | 1 | 1 |

### Example 2

### Determining the biological activity of milk stored under moderate pressure at sub-zero temperatures for 3 months.

In the samples of raw milk and milk stored under moderate-pressure-subzero-temperature conditions, prepared according to the methodology described in the previous example, the content of antimicrobial proteins - lactoferrin, lysozyme, α-lactalbumin, and sIgA - was determined. Each measurement for each milk sample and storage condition (pressure, time, temperature) was performed for two different milk portions in three replicates. Before measuring the contents of α-lactalbumin, lysozyme, and lactoferrin, the raw milk samples and milk stored under pressure were centrifuged at 4°C, 12,000 × g for 15 minutes. The clear supernatant was collected into glass vials and analyzed using high-performance liquid chromatography (HPLC) with an Agilent Technologies 1200 series liquid chromatograph equipped with a DAD detector. The separation was performed on a Kinetex XB-C18 chromatographic column (4.6 × 150 mm, 5 µm, 100A). The concentration of sIgA was measured using an ELISA kit (IDK^{®} sIgA ELISA) according to the manufacturer's protocol.

### Results

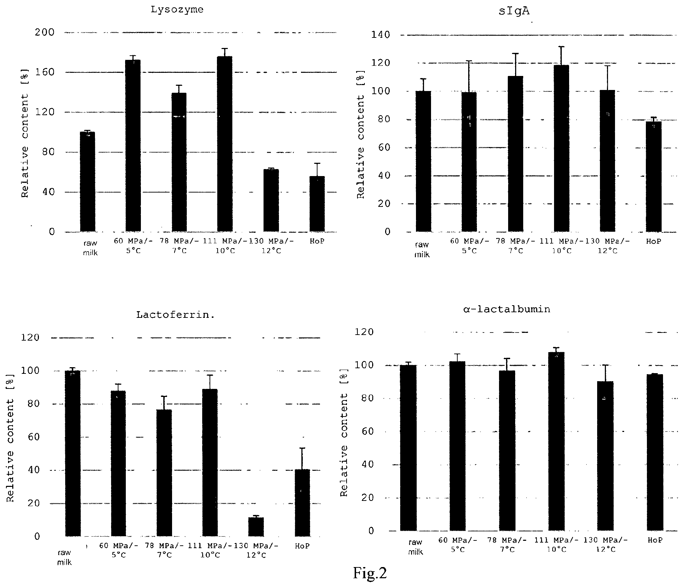

It was found that storage for 90 days at 60 MPa/-5°C, 78 MPa/-7°C, and 111 MPa/-10°C did not cause a significant decrease in the content of α-lactalbumin, lysozyme, and sIgA (Fig. 2).

The greatest changes were observed in the case of lactoferrin. As the pressure increased and the storage temperature decreased, the content of this protein lowered. The most significant changes occurred at 130 MPa/-12°C. Under these conditions, a significant decrease in lysozyme content was also observed. The highest retention of bioactive proteins was achieved by storing the milk at 111 MPa/-10°C. After 90 days of storage, the content of lysozyme, lactoferrin, α-lactalbumin, and sIgA was 161.18%, 83.56%, 106.22%, and 105.4%, respectively, of their initial values (Fig. 2).

### Example 3

### Determining the nutritional value of milk stored under moderate pressure at sub-zero temperatures for 3 months.

In raw milk and milk stored for 90 days under moderate-pressure-subzero-temperature conditions, the content of basic nutrients such as proteins, fats, carbohydrates, and energy value were measured.

Each determination for each milk sample and storage condition (pressure, time, temperature) was performed using two different milk portions, with three replicates. The analysis was conducted using the MIRIS Human Milk Analyzer (HMA) (Miris AB, Uppsala, Sweden), which utilizes mid-infrared (MIR) transmission spectroscopy.

### Results

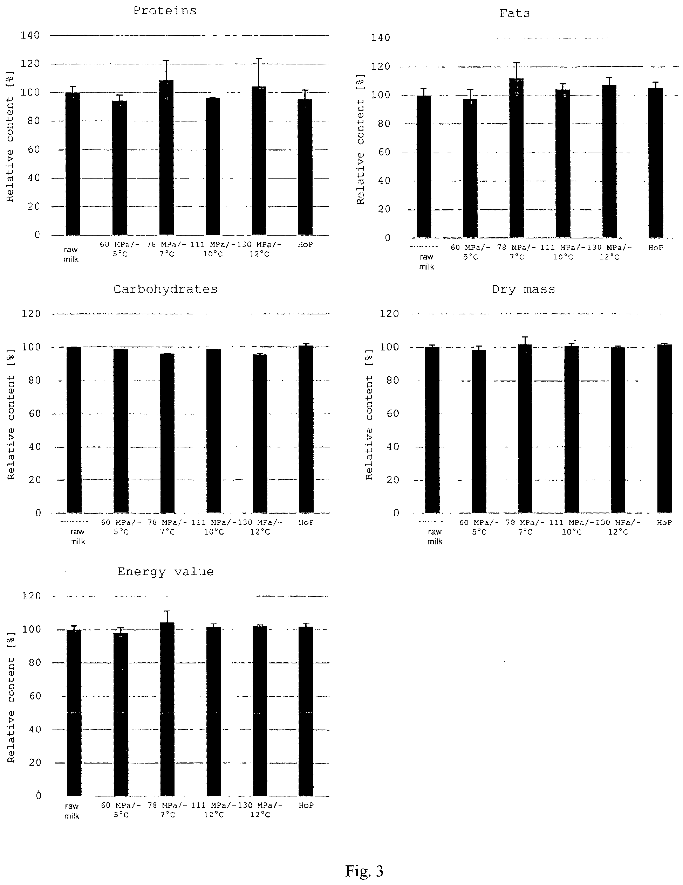

It was found that the nutritional value of the milk did not change during storage under moderate-pressure-subzero-temperature conditions (Fig. 3). The content of protein, fat, carbohydrates, and dry matter remained unchanged after 90 days of storage under moderate pressure at: 60 MPa/-5°C, 78 MPa/-7°C, 111 MPa/-10°C, and 130 MPa/-12°C.

Note: the conditions of 78 MPa to 111 MPa and -7°C to -10°C are according to the present invention.

## Claims

1. Method of preserving human milk comprises the step of storing milk at lowered temperature, characterized that preservation process of the human milk is carried out under moderate pressures ranging from 78 MPa to 111 MPa and at temperatures between -7°C to -10°C , in an unfrozen state, for a duration ranging from 2 days to 63 days.

2. Method according to claim 1, wherein after the storing step, milk portions are held for up to 90 days at pressures between 78 MPa to 111 MPa and temperatures between - 7°C to -10°C

3. Method according to claims 1-2, wherein the pressure is generated directly in a known pressure vessel by lowering the temperature of the closed system below 0°C and the amount of the generated pressure is being selected based on the preservation temperature based on the liquid-solid phase diagram of water.

4. Method according to claims 1-3, wherein portions of human milk are placed in known high-pressure vessels and are secured in a unfrozen zone, in order to achieve the required temperature for preservation the vessel is placed into a cryogenic bath with a temperature range between -7°C and -10°C.

## Patentansprüche

1. Verfahren zur Konservierung von Frauenmilch, umfassend den Schritt des Lagerns der Milch bei erniedrigter Temperatur, **dadurch gekennzeichnet, dass** der Konservierungsprozess der Frauenmilch bei moderaten Drücken im Bereich von 78 MPa bis 111 MPa und bei Temperaturen zwischen -7 °C und -10 °C in ungefrorenem Zustand über einen Zeitraum von 2 Tagen bis 63 Tagen durchgeführt wird.

2. Verfahren nach Anspruch 1, wobei nach dem Lagerungsschritt Milchportionen bis zu 90 Tage lang bei Drücken zwischen 78 MPa und 111 MPa und Temperaturen zwischen -7 °C und -10 °C gehalten werden.

3. Verfahren nach den Ansprüchen 1 bis 2, wobei der Druck direkt in einem bekannten Druckbehälter durch Absenken der Temperatur des geschlossenen Systems unter 0 °C erzeugt wird und der Wert des erzeugten Drucks in Abhängigkeit von der Konservierungstemperatur auf Grundlage des Flüssig-Fest-Phasendiagramms des Wassers ausgewählt wird.

4. Verfahren nach den Ansprüchen 1 bis 3, wobei Portionen von Frauenmilch in bekannten Hochdruckbehältern angeordnet und in einer ungefrorenen Zone gesichert werden, wobei der Behälter zum Erreichen der für die Konservierung erforderlichen Temperatur in ein kryogenes Bad mit einem Temperaturbereich zwischen -7 °C und -10 °C eingebracht wird.

## Revendications

1. Procédé de conservation du lait humain comprenant l'étape de stockage du lait à une température abaissée, **caractérisé en ce que** le processus de conservation du lait humain est réalisé sous des pressions modérées comprises entre 78 MPa et 111 MPa et à des températures comprises entre -7 °C et -10 °C, à l'état non congelé, pendant une durée de 2 jours à 63 jours.

2. Procédé selon la revendication 1, dans lequel, après l'étape de stockage, des portions de lait sont maintenues pendant une durée allant jusqu'à 90 jours à des pressions comprises entre 78 MPa et 111 MPa et à des températures comprises entre -7 °C et -10 °C.

3. Procédé selon les revendications 1 à 2, dans lequel la pression est générée directement dans un récipient sous pression connu en abaissant la température du système fermé au-dessous de 0 °C, et la valeur de la pression générée est sélectionnée en fonction de la température de conservation sur la base du diagramme de phases liquide-solide de l'eau.

4. Procédé selon les revendications 1 à 3, dans lequel des portions de lait humain sont placées dans des récipients à haute pression connus et maintenues dans une zone non congelée, le récipient étant placé dans un bain cryogénique présentant une plage de températures comprise entre -7 °C et -10 °C afin d'atteindre la température requise pour la conservation.
